(19) Europäisches Patentamt
European Patent Office
Office européen des brevets

(11) **EP 3 299 839 B1**

(12) **EUROPEAN PATENT SPECIFICATION**

(45) Date of publication and mention
of the grant of the patent:
**17.08.2022 Bulletin 2022/33**

(21) Application number: **16465540.9**

(22) Date of filing: **26.09.2016**

(51) International Patent Classification (IPC):
*G01S 13/931* *(2020.01)*   *G01S 7/40* *(2006.01)*
*G01S 13/93* *(2020.01)*   *G01S 13/52* *(2006.01)*
*G01S 13/72* *(2006.01)*   *G01S 13/86* *(2006.01)*

(52) Cooperative Patent Classification (CPC):
**G01S 7/40; G01S 13/931;** G01S 7/4039;
G01S 13/52; G01S 13/726; G01S 13/86;
G01S 2013/9322

(54) **METHOD, MONITORING UNIT, AND RADAR SENSOR**

VERFAHREN, ÜBERWACHUNGSEINHEIT UND RADARSENSOR

PROCÉDÉ, UNITÉ DE SURVEILLANCE ET DÉTECTEUR RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.03.2018 Bulletin 2018/13**

(73) Proprietor: **Continental Autonomous Mobility
Germany GmbH
85057 Ingolstadt (DE)**

(72) Inventor: **Olaru, Ion Marian
555300 Cisnadie (RO)**

(74) Representative: **Continental Corporation
c/o Continental Automotive GmbH
Intellectual Property
Nordostpark 30
90411 Nürnberg (DE)**

(56) References cited:
**EP-A1- 1 519 203       EP-A2- 1 278 075
DE-A1-102005 059 902**

**Description**

TECHNICAL FIELD

The invention relates to a method for monitoring performance of a radar sensor, a respective monitoring unit, and a radar sensor.

BACKGROUND

Although applicable to any radar system, the present invention will be described in combination with long range radars in automotive applications.

In modern vehicles, like automobiles or trucks, a plurality of electronic system can assist the driver in driving the vehicle. Some systems are mere passive systems that only indicate to the driver special circumstances, like e.g. blinking a light in the side mirror if another vehicle is in the blind spot.

Other driver assistance systems can actively assist the driver in controlling the vehicle. Such driver assistance systems can e.g. accelerate or decelerate the vehicle or actively steer the vehicle to keep the vehicle on a predetermined track of e.g. a motorway.

All these driver assistance systems require detailed information about the vehicles surroundings, which can e.g. be provided by sensors on the vehicle, like e.g. cameras and radar sensors.

Radar sensors in vehicles can be influenced by environmental conditions, which can influence the range in which objects can be detected by the respective sensor.

DE 10 2005 059 902 A1 describes a method for monitoring a state of a radar sensor of a vehicle, wherein the sensor captures data indicating a distance of the vehicle relative to an object. The sensor data is stored in a storage unit and statistically analysed by means of a programmable processor unit. Statistical analysis may include comparing a statistical distribution of the captured distance values with a predefined distribution, wherein a mean value of the differences of the frequency of the captured distance values is compared to a mean value of the differences of the frequency of the distance values of the predefined distribution.

EP 1 278 075 A2 discloses to capture a distribution of radar cross section (RCS) values of a radar sensor over a plurality of cycles and comparing mean value of the frequency of these values with a mean value of the frequency of a predefined distribution of RCS values.

EP 1 519 203 A1 describes to capture a RCS over a plurality of cycles and to monitor a course of the RCS over time, wherein a loss of sensor performance is indicated by a decrease of the RCS over time.

SUMMARY

The present invention provides a method for monitoring performance of a radar sensor with the features of claim 1, a monitoring unit with the features of claim 7, and a radar sensor with the features of claim 12.

Radar sensors can monitor their performance and provide an indication about their performance. A radar sensor can e.g. monitor the range of visibility of moving objects and stationary objects. Further the radar sensor can monitor the range, at which an object is detected for the first time (for oncoming objects), and at which an object is detected for the last time (for ongoing objects). For example histograms can be generated and statistically analysed for the range of visibility of moving and stationary objects and the first/last time of detection of objects. Especially the histograms for moving and stationary objects can e.g. comprise extrapolated range information. The extrapolated range information refers to the maximum range at which the respective object could still be detected, as opposed to the distance, at which the respective object was actually detected.

Based on the statistical analysis of these histograms a sensor degradation information can be provided. A degradation of the radar sensor can be reported, e.g. if the range of visibility of the radar sensor drops below a predetermined threshold. The range of visibility can e.g. be calculated as a weighted mean value of the mean values of the above mentioned histograms.

However, in quickly changing conditions, like e.g. heavy rain or snow fall, an approach, which yields results more quickly than the statistical approach, would be usefully. Therefore, the present invention provides further features, which can e.g. be used in combination with the statistical approach of calculating a range of visibility for the radar sensor.

The present invention is based on the finding that a quick decrease of the range of visibility alone already indicates a degraded sensor performance, even if the statistically calculated range of visibility is still above the respective threshold value.

By calculating the gradient of the range of visibility and comparing the gradient to a predetermined threshold value, the present invention therefore allows quickly detecting a performance degradation in the radar sensor, even if the range of visibility value is still above a respective threshold. It is understood that the threshold value for the gradient can be a negative value, since a degradation and therefore a decrease of the range of visibility is to be detected. Further embodiments of the present invention are subject of the further subclaims and of the following description, referring to the drawings.

According to the invention, the range of visibility and the gradient of the range of visibility are calculated every cycle of the radar sensor. A cycle of the radar sensor refers to a working cycle of the radar sensor, in which the radar sensor provides an updated information about detected objects. The cycle time of a radar sensor in a vehicle can e.g. be below 100 ms, especially below 80 ms or 50ms. Calculating the range of visibility and the gradient of the range of visibility in every cycle allows quickly detecting a degraded performance of the radar sensor.

In a possible embodiment, the range of visibility can be calculated as a weighted mean value of:

a mean value of a histogram of the detection range of moving objects,
a mean value of a histogram of the detection range of stationary objects, and
a mean value of a histogram of the farthest and/or nearest range, at which an object is detected by the radar sensor.

Since the value of the range of visibility is calculated in this embodiment based on a plurality of information sources, the quality of the calculated value can be improved. According to the invention, the most recent, also called the filtered, gradient of the range of visibility (also called delta_history) is calculated by multiplying the former value of the gradient with one minus alpha and adding a new value of the gradient (also called delta_new) multiplied by alpha. Alpha is a filter parameter between 0 and 1.

The most recent value of the gradient of the range of visibility is the value, which is used for comparing with the threshold value and determining a degradation of the sensor. The former value of the gradient is the most recent value of the gradient of the former cycle of the radar sensor. Finally, the new value of the gradient is the value of the gradient as calculated in the recent cycle of the radar sensor. The respective formula would then be:

```
delta_history = alpha*delta_new + (1-alpha)* delta_history
```

By filtering the gradient of the range of visibility it can be tuned depending e.g. on the respective application or the respective radar sensor how much influence the former values of the gradient of the range of visibility have on the most recent value of the gradient. If for example alpha has a value of 1 only the new gradient value will define the most recent gradient of the range of visibility. If alpha has a value of 0.5 the former and the new value of the gradient of the range of visibility will have the same influence. The lower the value of alpha is, the more time the former values of the gradient will have a significant influence in the filtered value of the gradient.

The following section serves merely as a mathematical explanation:
The choosing of alpha is such that the above formula takes into account only last N cycles, where N is defined by the first cycle of the radar sensor. Indeed, we have the following relation for the above formula:

$$y_n = (1 - \propto)^n y_0 + \propto \sum_{k=1} (1 - \propto)^{n-k} x_k$$

where $y_n$ is the filtered gradient (delta_history) and $x_n$ is the new gradient (delta_new).

According to the invention, the new value of the gradient is calculated in every cycle of the radar sensor by subtracting the range of visibility of the former cycle of the radar sensor from the range of visibility of the radar sensor in the recent cycle and dividing the result by the cycle time. This is a simple calculation method for the change of the range of visibility over time.

In a possible embodiment, the gradient of the range of visibility can be mapped to a probability for a degradation in performance of the radar sensor, wherein the predetermined threshold value can be provided as a probability threshold value. In a possible embodiment, the mapping can be a linear mapping with a negative gradient.

In a possible embodiment, a degradation may be reported only if any combination of the following requirements is met: if in the recent cycle a prior detected object is lost at least once by the radar sensor and if the last detected object is farther away from the radar sensor than a first range threshold and if the range of visibility of the radar sensor is higher than a predetermined second range threshold and if the variation of the confidence value for the radar sensor is below a predetermined variation threshold. In one embodiment it can be necessary that all the above requirements are met.

Including any of these requirements in the method excludes situations from the assessment, where a degradation of the radar sensor could be falsely reported.

For example, if no object is lost by the radar sensor, even with a high negative gradient of the range of visibility there is no need to report a degraded performance.

Some radar sensor may have problems detecting objects, which are too near to the radar sensor. Therefore, if an object is detected nearer to the radar sensor than the first range threshold, it can be decided not to apply the method of the present invention.

Further, even with a high negative gradient of the range of visibility, there is no need to report a degraded performance, if the overall range of visibility is above the first range threshold, which can e.g. be 200 m, 300 m, or any other value according to the respective application.

The confidence value for the radar sensor is a value, which is provided by the radar sensor internally and is e.g. based on the number of objects, which are detected by the radar sensor. If the variation of the confidence value for the radar sensor is low this therefore means, that approximately the same number of objects have been detected. Instead a high variation of the confidence value for the radar sensor means that more or less objects have been detected than before.

A high variation of the confidence value for the radar sensor can e.g. happen if a vehicle leaves a motorway with a plurality of vehicles and continues on a small street with a low number of other vehicles.

Including the requirement of a low variation of the confidence value for the radar sensor therefore excludes such changes of driving circumstances, like the above change from a motorway to a small road, from the application of the method according to the invention. However, as soon as the situation settles, the algorithm can be applied again.

In a possible embodiment, reporting a degradation may be only performed if rain and/or low temperatures are reported to the radar sensor by internal sensors or via a data interface e.g. from other systems in a vehicle. This means that the method according to the present invention is only applied, if the outer circumstances justify a degraded sensor performance.

BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1    shows a block diagram of an embodiment of a monitoring unit according to the present invention;

Fig. 2    shows a flow diagram of an embodiment of a method according to the present invention;

Fig. 3    shows a flow diagram of another embodiment of a method according to the present invention; and

Fig. 4    shows a diagram of an embodiment of a probability according to the present invention.

In the figures like reference signs denote like elements unless stated otherwise.

DETAILED DESCRIPTION OF THE DRAWINGS

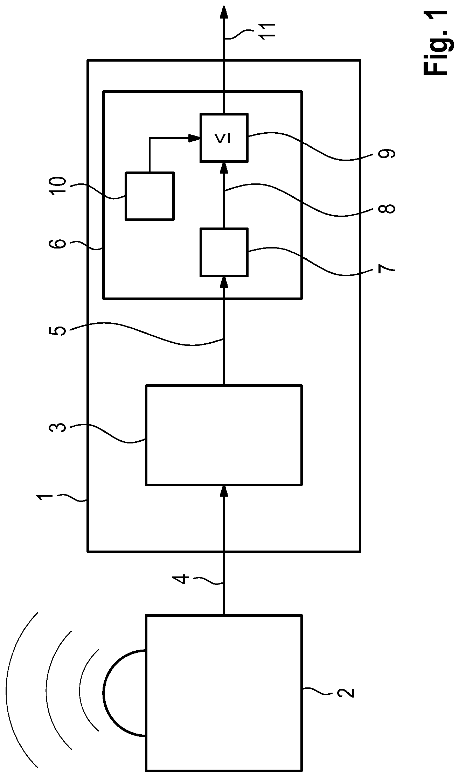

The monitoring unit 1 of Fig. 1 monitors a radar sensor 2. Just exemplarily, the radar sensor 2 provides the monitoring unit 1 with radar data 4, which is received by a range monitor 3 of the monitoring unit 1. The radar data 4 refers to detected objects and e.g. internal data of the radar sensor 2. The range monitor 3 monitors and calculates based on the radar data 4, the range of visibility 5 of the radar sensor 2 and provides the respective value to calculation unit 6. The calculation unit 6 comprises a calculation function 7, which based on the values of the range of visibility 5 calculates a gradient 8 of the range of visibility 5 and provides the gradient 8 to a comparator 9. The comparator 9 compares the gradient 8 to a threshold value 10 and reports a degradation of the radar sensors 2 if the gradient is below the threshold value 10, e.g. by outputting the degradation signal 11.

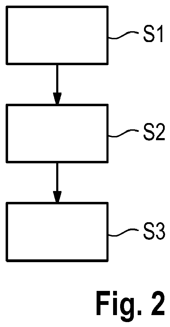

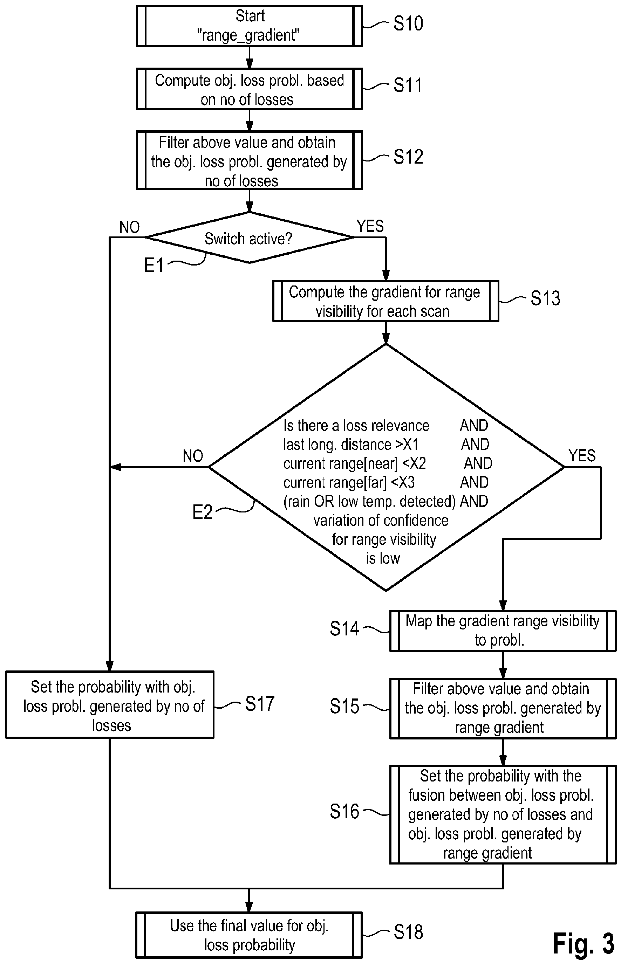

Details of the single functions will be given in conjunction with Figs. 2 and 3, wherein the explanations regarding the method of Figs. 2 and 3 can be applied mutatis mutandis to the elements of the monitoring unit 1 as shown in Fig. 1.

It is understood, that the monitoring unit 1, although shown as separate unit, can be integrated into the radar sensor 2. Especially in a highly networked environments, like e.g. modern vehicle networks, the monitoring unit 1 can also be integrated in another electronic control unit of the vehicle and receive the radar data 4 e.g. via a network or bus system in the vehicle.

The single functions of the monitoring unit 1 can be implemented in hardware, software or any combination of hardware and software.

Fig. 2 shows a flow diagram of an embodiment of a method for monitoring performance of a radar sensor 2.

The method comprises monitoring S1 the range of visibility 5 of the radar sensor 2. Further, the gradient 8 of the range of visibility 5 of the radar sensor 2 is calculated. Finally, a degradation of the performance of the radar sensor 2 is reported S3, if the gradient 8 is below a predetermined threshold value 10, e.g. if the absolute value of the gradient 8 is larger than an absolute value of a negative threshold value 10.

Usually, radar sensors 2 work in cycles. In every cycle they produce radar data 4, which refers to detected objects and e.g. internal data of the radar sensor 2, or raw sensor data. The range of visibility 5 and the gradient 8 of the range of visibility 5 can therefore be calculated every cycle of the radar sensor 2.

The most recent gradient 8 of the range of visibility 5, i.e. for the recent cycle of the radar sensor 2, which is compared to the threshold value 10, is calculated by filtering. The filter comprises multiplying the former value of the gradient 8, i.e. of the former cycle, with one minus alpha and adding a new value of the gradient 8, i.e. the unfiltered value of the gradient in the present cycle, multiplied by alpha. Alpha is a filter parameter between 0 and 1. The new value of the gradient 8 is calculated in every cycle of the radar sensor 2 by subtracting the range of visibility 5 of the former cycle of the radar sensor 2 from the range of visibility 5 of the radar sensor 2 in the recent or present cycle and dividing the result by the cycle time.

One possible way of calculating the range of visibility 5 is to calculate a mean value, especially a weighted mean value, of:

a mean value of a histogram of the detection range of moving objects,
a mean value of a histogram of the detection range of stationary objects, and
a mean value of a histogram of the farthest and/or nearest range, at which an object is detected.

The weights can e.g. range between 0 and 1, wherein the value based on the histogram of the farthest and/or nearest range, at which an object is detected, can have a lower weight than the other values.

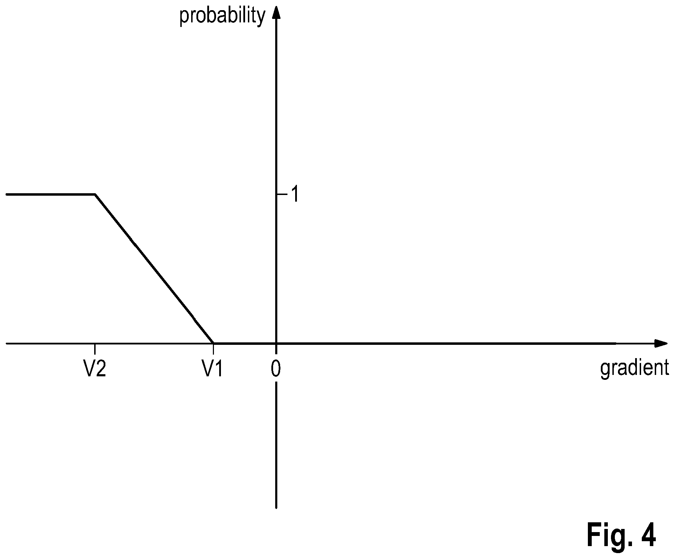

For further processing the gradient 8 of the range of visibility 5 can e.g. be mapped to a probability for a degradation in performance of the radar sensor 2. The predetermined threshold value 10 can also be provided as a probability threshold value 10. The mapping can e.g. be a linear mapping with a negative gradient (see e.g. Fig. 4).

To declare a degradation of the radar sensor 2 only in adequate situations, reporting a degradation can e.g. only be performed if a selected combination of any one of the following requirements is met: if in the recent cycle a prior detected object is lost at least once by the radar sensor 2 and if the last detected object is farther away from the radar sensor 2 than a first range threshold and if the range of visibility 5 of the radar sensor 2 is higher than a predetermined second range threshold and if the variation of the confidence value for the radar sensor 2 is below a predetermined variation threshold. A further requirement can e.g. be that rain and/or low temperatures are reported to the radar sensor 2 by internal sensors or via a data interface.

Fig. 3 shows a flow diagram of another embodiment of the method according to the present invention, especially of the calculation of the probability of a sensor degradation.

In step S10 the method for a single cycle of the radar sensor 2 is started. In step S11 the probability of a loss of objects by the radar sensor 2 is calculated based on a loss observer, which is not the subject of the present invention. Any known loss observer can therefore be used in step S11. In step S12 the value received in step S11 is filtered. The decision E1 monitors if a predetermined switch is active. The switch can e.g. be a variable in a program and allows deactivating the detection of a degradation of the radar sensor 2 according to the present invention. If the switch is deactivated, the result of steps S12 is set as the output probability for outputting in step S18.

However, if the switch is active, in step S13 the gradient 8 of the range of visibility 5 is calculated. In decision E2 a plurality of requirements are monitored for the further application of the method according to the present invention.

A degradation may e.g. be reported only if in the recent cycle a prior detected object is lost at least once by the radar sensor 2. Another requirement can be e.g. that the last detected object is farther away from the radar sensor than a first range threshold X1 and/or that the range of visibility of the radar sensor is higher than a predetermined second range threshold X2, X3. In Fig. 3 two values [Near], [Far] are shown, since some radar sensors 2 can measure in a near and a far distance mode. Finally, the variation of the confidence value for the radar sensor 2 can be required to be below a predetermined variation threshold. Further, requirements, which do not depend on the radar sensor 2 itself can e.g. be that rain and/or low temperatures are reported to the radar sensor 2 by internal sensors or via a data interface e.g. from other systems in a vehicle. Although all requirements are shown in Fig. 3 as AND combination, it is understood that any combination of these requirements is possible.

If the respective requirements are met, in step S14 the gradient 8 is mapped to a probability (see e.g. Fig. 4). In step S15 the probability is filtered, as explained above for the gradient 8. Further, the value obtained in step S12 is fused with the value obtained in step S15, e.g. by calculating a weighted mean value. The result of step S16 is used in step S18 as the final probability for a loss of an object by the radar sensor 2.

Fig. 4 shows a diagram with a mapping of the gradient 8 to a probability.

In the diagram the abscissa represents the gradient 8 and the ordinate represents the probability. It can be seen, that between the values V1 and V2 the probability is a negative linear mapping of the gradient 8. If the gradient is lower than V2 the probability of an object loss is mapped to 1. Otherwise, if the gradient is higher than VI, the probability of an object loss is mapped to 0.

The value V1 can e.g. be a value between 0 and -0.5, wherein the value V2 can e.g. be a value between -1 and -2. The mapping can then e.g. be defined by the respective line equation.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications as may be included within the scope of the invention defined by the appended claims.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

List of reference signs

| | |
|---|---|
| 1 | monitoring unit |
| 2 | radar sensor |
| 3 | range monitor |
| 4 | radar data |
| 5 | range of visibility |
| 6 | calculation unit |
| 7 | calculation function |
| 8 | gradient of the range of visibility |
| 9 | comparator |
| 10 | threshold value |
| 11 | degradation signal |
| S1 - S3 | method step |
| S10 - S18 | method step |
| E1, E2 | decision |

**Claims**

1. Method for monitoring performance of a radar sensor (2), the method comprising:

monitoring (S1) by a range monitor (3) of a monitoring unit (1) the range of visibility (5) of the radar sensor (2), calculating (S2) by a calculation unit (6) of the monitoring unit (1) a most recent gradient (8) of the range of visibility (5) of the radar sensor (2) by multiplying the former value of the gradient (8) with one minus alpha and adding a new value of the gradient (8) multiplied by alpha, wherein alpha is a filter parameter between 0 and 1, and wherein the new value of the gradient (8) is calculated in every cycle of the radar sensor (2) by subtracting the range of visibility (5) of the former cycle of the radar sensor (2) from the range of visibility (5) of the radar sensor (2) in the recent cycle and dividing the result by the cycle time, wherein the range of visibility (5) and the most recent gradient (8) of the range of visibility (5) are calculated every cycle of the radar sensor (2), wherein the cycle of the radar sensor (2) is a working cycle of the radar sensor in which the radar sensor (2) provides an updated information about detected objects and reporting (S3) by the calculation unit (6) a degradation of the performance of the radar sensor (2), if the most recent gradient (8) is below a predetermined threshold value (10).

2. Method according to claim 1, wherein the range of visibility (5) is calculated as a weighted mean value of:

a mean value of a histogram of the detection range of moving objects,
a mean value of a histogram of the detection range of stationary objects, and
a mean value of a histogram of the farthest and/or nearest range, at which an object is detected.

3. Method according to any one of the preceding claims, wherein the gradient (8) of the range of visibility (5) is mapped to a probability for a degradation in performance of the radar sensor (2), and
wherein the predetermined threshold value (10) is provided as a probability threshold value (10).

4. Method according to claim 3, wherein the mapping is a linear mapping with a negative gradient.

5. Method according to any one of the preceding claims, wherein reporting a degradation is only performed if in the recent cycle a prior detected object is lost at least once by the radar sensor (2) and/or if the last detected object is farther away from the radar sensor (2) than a first range threshold and/or if the range of visibility (5) of the radar sensor (2) is higher than a predetermined second range threshold and/or if a variation of a confidence value for the radar sensor (2) is below a predetermined variation threshold.

6. Method according to any one of the preceding claims, wherein reporting a degradation is only performed if rain and/or low temperatures are reported to the radar sensor (2) by internal sensors or via a data interface.

7. Monitoring unit (1) for monitoring performance of a radar sensor (2), the monitoring unit (1) comprising:

a range monitor (3) configured to monitor and calculate the range of visibility (5) of the radar sensor (2), and
a calculation unit (6) configured to calculate a most recent gradient (8) of the range of visibility (5) by multiplying the former value of the gradient (8) with one minus alpha and adding a new value of the gradient (8) multiplied by alpha, wherein alpha is a filter parameter between 0 and 1, and to calculate the new value of the gradient (8) in every cycle of the radar sensor (2) by subtracting the range of visibility (5) of the former cycle of the radar sensor (2) from the range of visibility (5) of the radar sensor (2) in the recent cycle and dividing the result by the cycle time, wherein the calculation unit (6) is configured to report a degradation of the performance of the radar sensor (2) if the gradient (8) is below a predetermined threshold value (10),
wherein the range monitor (3) is configured to calculate the range of visibility (5) and the calculation unit (6) is configured to calculate the most recent gradient (8) of the range of visibility (5) every cycle of the radar sensor (2), wherein the cycle of the radar sensor (2) is a working cycle of the radar sensor (2) in which the radar sensor (2) provides an updated information about detected objects.

8. Monitoring unit (1) according to claim 7, wherein the range monitor (3) is configured to:
calculate the range of visibility (5) as a weighted mean value of:

a mean value of a histogram of the detection range of moving objects,
a mean value of a histogram of the detection range of stationary objects, and
a mean value of a histogram of the farthest and/or nearest range, at which an object is detected.

9. Monitoring unit (1) according to any one of the preceding claims 7 and 8, wherein the calculation unit (6) is configured to map the gradient (8) of the range of visibility (5) to a probability for a degradation in performance of the radar sensor (2), and provide the predetermined threshold value (10) as a probability threshold value (10), especially wherein the mapping is a linear mapping with a negative gradient.

10. Monitoring unit (1) according to any one of the preceding claims 7 to 9, wherein the calculation unit (6) is configured to only report a degradation if in the recent cycle a prior detected object is lost at least once by the radar sensor (2) and/or if the last detected object is farther away from the radar sensor (2) than a first range threshold and/or if the range of visibility (5) of the radar sensor (2) is higher than a predetermined second range threshold and/or if the variation of the confidence value for the radar sensor (2) is below a predetermined variation threshold.

11. Monitoring unit (1) according to any one of the preceding claims 7 to 10, wherein the calculation unit (6) is configured to only report a degradation if rain and/or low temperatures are reported to the radar sensor (2) by internal sensors or via a data interface.

12. Radar sensor (2) comprising a monitoring unit (1) according to any one of claim 7 to 11.

**Patentansprüche**

1. Verfahren zum Überwachen einer Leistung eines Radarsensors (2), wobei das Verfahren Folgendes aufweist:

Überwachen (S1), durch eine Reichweitenüberwachungsvorrichtung (3) einer Überwachungseinheit (1), der Reichweite einer Sicht (5) des Radarsensors (2), Berechnen (S2), durch eine Berechnungseinheit (6) der Überwachungseinheit (1), eines aktuellsten Gradienten (8) der Reichweite einer Sicht (5) des Radarsensors (2) durch Multiplizieren des vorhergehenden Werts des Gradienten (8) mit eins minus Alpha und Addieren eines neuen Werts des Gradienten (8) multipliziert mit Alpha, wobei Alpha ein Filterparameter zwischen 0 und 1 ist, und wobei der neue Wert des Gradienten (8) in jedem Zyklus des Radarsensors (2) durch Subtrahieren der Reichweite einer Sicht (5) des vorhergehenden Zyklus des Radarsensors (2) von der Reichweite einer Sicht (5) des Radarsensors (2) in dem aktuellen Zyklus und Dividieren des Ergebnisses durch die Zykluszeit berechnet wird, wobei die Reichweite einer Sicht (5) und der aktuellste Gradient (8) der Reichweite einer Sicht (5) jeden Zyklus des Radarsensors (2) berechnet werden, wobei der Zyklus des Radarsensors (2) ein Arbeitszyklus des Radarsensors ist, in dem der Radarsensor (2) eine aktualisierte Information über detektierte Objekte bereitstellt, und
Berichten (S3), durch die Berechnungseinheit (6), einer Verschlechterung der Leistung des Radarsensors (2), wenn der aktuellste Gradient (8) unter einem vorbestimmten Schwellenwert (10) liegt.

2. Verfahren nach Anspruch 1, wobei die Reichweite einer Sicht (5) als ein gewichteter Mittelwert von Folgendem berechnet wird:

einem Mittelwert eines Histogramms der Detektionsreichweite von sich bewegenden Objekten,
einem Mittelwert eines Histogramms der Detektionsreichweite von stationären Objekten, und
einem Mittelwert eines Histogramms der weitesten und/oder der nächstliegenden Reichweite, an der ein Objekt detektiert wird.

3. Verfahren nach einem der vorhergehenden Ansprüche, wobei der Gradient (8) der Reichweite einer Sicht (5) auf eine Wahrscheinlichkeit für eine Verschlechterung bei einer Leistung des Radarsensors (2) abgebildet wird, und wobei der vorbestimmte Schwellenwert (10) als ein Wahrscheinlichkeitsschwellenwert (10) bereitgestellt wird.

4. Verfahren nach Anspruch 3, wobei das Abbilden ein lineares Abbilden mit einem negativen Gradienten ist.

5. Verfahren nach einem der vorhergehenden Ansprüche, wobei das Berichten einer Verschlechterung nur durchgeführt wird, wenn in dem aktuellen Zyklus ein zuvor detektiertes Objekt mindestens einmal durch den Radarsensor (2) verloren wird und/oder wenn das zuletzt detektierte Objekt weiter von dem Radarsensor (2) entfernt ist als ein erster Reichweitenschwellenwert und/oder wenn die Reichweite einer Sicht (5) des Radarsensors (2) höher ist als ein vorbestimmter zweiter Reichweitenschwellenwert und/oder wenn eine Schwankung eines Konfidenzwerts für den Radarsensor (2) unter einem vorbestimmten Schwankungsschwellenwert liegt.

6. Verfahren nach einem der vorhergehenden Ansprüche, wobei das Berichten einer Verschlechterung nur durchgeführt wird, wenn Regen und/oder niedrige Temperaturen durch interne Sensoren oder über eine Datenschnittstelle zu dem Radarsensor (2) berichtet werden.

7. Überwachungseinheit (1) zum Überwachen einer Leistung eines Radarsensors (2), wobei die Überwachungseinheit (1) Folgendes aufweist:

eine Reichweitenüberwachungsvorrichtung (3), die dazu ausgebildet ist, die Reichweite einer Sicht (5) des Radarsensors (2) zu überwachen und zu berechnen, und

eine Berechnungseinheit (6), die dazu ausgebildet ist, einen aktuellsten Gradienten (8) der Reichweite einer Sicht (5) durch Multiplizieren des vorhergehenden Werts des Gradienten (8) mit eins minus Alpha und Addieren eines neuen Werts des Gradienten (8) multipliziert mit Alpha zu berechnen, wobei Alpha ein Filterparameter zwischen 0 und 1 ist, und den neuen Wert des Gradienten (8) in jedem Zyklus des Radarsensors (2) durch Subtrahieren der Reichweite einer Sicht (5) des vorhergehenden Zyklus des Radarsensors (2) von der Reichweite einer Sicht (5) des Radarsensors (2) in dem aktuellen Zyklus und Dividieren des Ergebnisses durch die Zykluszeit zu berechnen, wobei die Berechnungseinheit (6) dazu ausgebildet ist, eine Verschlechterung der Leistung des Radarsensors (2) zu berichten, wenn der Gradient (8) unter einem vorbestimmten Schwellenwert (10) liegt,

wobei die Reichweitenüberwachungsvorrichtung (3) dazu ausgebildet ist, die Reichweite einer Sicht (5) zu berechnen, und die Berechnungseinheit (6) dazu ausgebildet ist, den aktuellsten Gradienten (8) der Reichweite einer Sicht (5) jeden Zyklus des Radarsensors (2) zu berechnen, wobei der der Zyklus des Radarsensors (2) ein Arbeitszyklus des Radarsensors (2) ist, in dem der Radarsensor (2) eine aktualisierte Information über detektierte Objekte bereitstellt.

8. Überwachungseinheit (1) nach Anspruch 7, wobei die Reichweitenüberwachungsvorrichtung (3) zu Folgendem ausgebildet ist:
Berechnen der Reichweite einer Sicht (5) als einen gewichteten Mittelwert von Folgendem:

einem Mittelwert eines Histogramms der Detektionsreichweite von sich bewegenden Objekten,
einem Mittelwert eines Histogramms der Detektionsreichweite von stationären Objekten, und
einem Mittelwert eines Histogramms der weitesten und/oder der nächstliegenden Reichweite, an der ein Objekt detektiert wird.

9. Überwachungseinheit (1) nach einem der vorhergehenden Ansprüche 7 und 8, wobei die Berechnungseinheit (6) dazu ausgebildet ist, den Gradienten (8) der Reichweite einer Sicht (5) auf eine Wahrscheinlichkeit für eine Verschlechterung bei einer Leistung des Radarsensors (2) abzubilden, und den vorbestimmten Schwellenwert (10) als einen Wahrscheinlichkeitsschwellenwert (10) bereitzustellen, insbesondere wobei das Abbilden ein lineares Abbilden mit einem negativen Gradienten ist.

10. Überwachungseinheit (1) nach einem der vorhergehenden Ansprüche 7 bis 9, wobei die Berechnungseinheit (6) dazu ausgebildet ist, eine Verschlechterung nur zu berichten, wenn in dem aktuellen Zyklus ein zuvor detektiertes Objekt mindestens einmal durch den Radarsensor (2) verloren wird und/oder wenn das zuletzt detektierte Objekt weiter von dem Radarsensor (2) entfernt ist als ein erster Reichweitenschwellenwert und/oder wenn die Reichweite einer Sicht (5) des Radarsensors (2) höher ist als ein vorbestimmter zweiter Reichweitenschwellenwert und/oder wenn die Schwankung des Konfidenzwerts für den Radarsensor (2) unter einem vorbestimmten Schwankungsschwellenwert liegt.

11. Überwachungseinheit (1) nach einem der vorhergehenden Ansprüche 7 bis 10, wobei die Berechnungseinheit (6) dazu ausgebildet ist, eine Verschlechterung nur zu berichten, wenn Regen und/oder niedrige Temperaturen durch interne Sensoren oder über eine Datenschnittstelle zu dem Radarsensor (2) berichtet werden.

12. Radarsensor (2), der eine Überwachungseinheit (1) nach einem der vorhergehenden Ansprüche 7 bis 11 aufweist.

**Revendications**

1. Procédé de surveillance de la performance d'un capteur radar (2), le procédé comprenant :

la surveillance (S1), par un module de surveillance de portée (3) d'une unité de surveillance (1), de la portée de visibilité (5) du capteur radar (2),
le calcul (S2), par une unité de calcul (6) de l'unité de surveillance (1), d'un gradient le plus récent (8) de la portée de visibilité (5) du capteur radar (2) par multiplication de la valeur précédente du gradient (8) par un moins alpha et ajout d'une nouvelle valeur du gradient (8) multipliée par alpha, alpha étant un paramètre de filtre entre 0 et 1, et la nouvelle valeur du gradient (8) étant calculée à chaque cycle du capteur radar (2) par soustraction de la portée de visibilité (5) du cycle précédent du capteur radar (2) à la portée de visibilité (5) du capteur radar (2) dans le cycle récent et division du résultat par le temps de cycle, la portée de visibilité (5) et le gradient le plus récent (8) de la portée de visibilité (5) étant calculés à chaque cycle du capteur radar (2), le cycle du capteur radar (2) étant un cycle de travail du capteur radar au cours duquel le capteur radar (2) fournit des informations mises à jour concernant des objets détectés et

la notification (S3), par l'unité de calcul (6), d'une détérioration de la performance du capteur radar (2) si le gradient le plus récent (8) est au-dessous d'une valeur-seuil prédéterminée (10).

**2.** Procédé selon la revendication 1, dans lequel la portée de visibilité (5) est calculée sous forme d'une valeur moyenne pondérée de :

une valeur moyenne d'un histogramme de la portée de détection d'objets en mouvement, une valeur moyenne d'un histogramme de la portée de détection d'objets immobiles, et une valeur moyenne d'un histogramme de la portée la plus éloignée et/ou la plus proche, auxquelles/à laquelle un objet est détecté.

**3.** Procédé selon l'une quelconque des revendications précédentes, dans lequel le gradient (8) de la portée de visibilité (5) est mis en correspondance avec une probabilité d'une détérioration de la performance du capteur radar (2), et dans lequel la valeur-seuil prédéterminée (10) est fournie sous forme d'une valeur-seuil de probabilité (10).

**4.** Procédé selon la revendication 3, dans lequel la mise en correspondance est une mise en correspondance linéaire à gradient négatif.

**5.** Procédé selon l'une quelconque des revendications précédentes, dans lequel la notification d'une détérioration n'est réalisée que si, dans le cycle récent, un objets détecté antérieurement est perdu au moins une fois par le capteur radar (2) et/ou si le dernier objet détecté est plus éloigné du capteur radar (2) qu'un premier seuil de portée et/ou si la portée de visibilité (5) du capteur radar (2) est au-dessus d'un deuxième seuil de portée prédéterminé et/ou si une variation d'une valeur de confiance pour le capteur radar (2) est au-dessous d'un seuil de variation prédéterminé.

**6.** Procédé selon l'une quelconque des revendications précédentes, dans lequel la notification d'une détérioration n'est réalisée que si la pluie et/ou des températures basses sont notifiées au capteur radar (2) par des capteurs internes ou par le biais d'une interface de données.

**7.** Unité de surveillance (1) pour la surveillance de la performance d'un capteur radar (2), l'unité de surveillance (1) comprenant :

un module de surveillance de portée (3) configuré pour surveiller et calculer la portée de visibilité (5) du capteur radar (2), et

une unité de calcul (6) configurée pour calculer un gradient le plus récent (8) de la portée de visibilité (5) en multipliant la valeur précédente du gradient (8) par un moins alpha et en ajoutant une nouvelle valeur du gradient (8) multipliée par alpha, alpha étant un paramètre de filtre entre 0 et 1, et pour calculer la nouvelle valeur du gradient (8) à chaque cycle du capteur radar (2) en soustrayant la portée de visibilité (5) du cycle précédent du capteur radar (2) à la portée de visibilité (5) du capteur radar (2) dans le cycle récent et en divisant le résultat par le temps de cycle,

l'unité de calcul (6) étant configurée pour notifier une détérioration de la performance du capteur radar (2) si le gradient (8) est au-dessous d'une valeur-seuil prédéterminée (10),

le module de surveillance de portée (3) étant configuré pour calculer la portée de visibilité (5) et l'unité de calcul (6) étant configurée pour calculer le gradient le plus récent (8) de la portée de visibilité (5) à chaque cycle du capteur radar (2), le cycle du capteur radar (2) étant un cycle de travail du capteur radar (2) au cours duquel le capteur radar (2) fournit des informations mises à jour concernant des objets détectés.

**8.** Unité de surveillance (1) selon la revendication 7, dans laquelle le module de surveillance de portée (3) est configuré pour :

calculer la portée de visibilité (5) sous forme d'une valeur moyenne pondérée de :

une valeur moyenne d'un histogramme de la portée de détection d'objets en mouvement, une valeur moyenne d'un histogramme de la portée de détection d'objets immobiles, et une valeur moyenne d'un histogramme de la portée la plus éloignée et/ou la plus proche, auxquelles/à laquelle un objet est détecté.

9. Unité de surveillance (1) selon l'une quelconque des revendications 7 et 8 précédentes, dans laquelle l'unité de calcul (6) est configurée pour mettre en correspondance le gradient (8) de la portée de visibilité (5) avec une probabilité d'une détérioration de la performance du capteur radar (2), et fournir la valeur-seuil prédéterminée (10) sous forme d'une valeur-seuil de probabilité (10), plus particulièrement dans laquelle la mise en correspondance est une mise en correspondance linéaire à gradient négatif.

10. Unité de surveillance (1) selon l'une quelconque des revendications 7 à 9 précédentes, dans laquelle l'unité de calcul (6) est configurée pour ne notifier une détérioration que si, dans le cycle récent, un objets détecté antérieurement est perdu au moins une fois par le capteur radar (2) et/ou si le dernier objet détecté est plus éloigné du capteur radar (2) qu'un premier seuil de portée et/ou si la portée de visibilité (5) du capteur radar (2) est au-dessus d'un deuxième seuil de portée prédéterminé et/ou si une variation d'une valeur de confiance pour le capteur radar (2) est au-dessous d'un seuil de variation prédéterminé.

11. Unité de surveillance (1) selon l'une quelconque des revendications 7 à 10 précédentes, dans laquelle l'unité de calcul (6) est configurée pour ne notifier une détérioration que si la pluie et/ou des températures basses sont notifiées au capteur radar (2) par des capteurs internes ou par le biais d'une interface de données.

12. Capteur radar (2) comprenant une unité de surveillance (1) selon l'une quelconque des revendications 7 à 11.

Fig. 1

EP 3 299 839 B1

Fig. 2

Start
"range_gradient" — S10

Compute obj. loss probl. based
on no of losses — S11

Filter above value and obtain
the obj. loss probl. generated by
no of losses — S12

NO ◁ Switch active? ▷ YES

E1

Compute the gradient for range
visibility for each scan — S13

NO ◁ Is there a loss relevance        AND
last long. distance >X1          AND
current range[near] <X2          AND
current range[far] <X3           AND
(rain OR low temp. detected) AND
variation of confidence
for range visibility
is low ▷ YES

E2

S14 — Map the gradient range visibility
to probl.

Set the probability with obj.
loss probl. generated by no of
losses — S17

S15 — Filter above value and obtain
the obj. loss probl. generated by
range gradient

S16 — Set the probability with the
fusion between obj. loss probl.
generated by no of losses and
obj. loss probl. generated by
range gradient

Use the final value for obj.
loss probability — S18

Fig. 3

Fig. 4

**EP 3 299 839 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005059902 A1
- EP 1278075 A2
- EP 1519203 A1